Europäisches Patentamt

European Patent Office

Office européen des brevets

(19)

(11) Veröffentlichungsnummer : **0 397 842 B1**

(12) # EUROPÄISCHE PATENTSCHRIFT

(45) Veröffentlichungstag der Patentschrift :
30.09.92 Patentblatt 92/40

(21) Anmeldenummer : 90900145.5

(22) Anmeldetag : 25.11.89

(86) Internationale Anmeldenummer :
PCT/EP89/01429

(87) Internationale Veröffentlichungsnummer :
WO 90/06249 14.06.90 Gazette 90/14

(51) Int. Cl.⁵ : **B60S 1/04,** B23P 19/04,
B23P 21/00, B65D 59/00

(54) VERFAHREN ZUR MONTAGE EINER WISCHANLAGE UND WISCHANLAGE.

(30) Priorität : 01.12.88 DE 3840501

(43) Veröffentlichungstag der Anmeldung :
22.11.90 Patentblatt 90/47

(45) Bekanntmachung des Hinweises auf die
Patenterteilung :
30.09.92 Patentblatt 92/40

(84) Benannte Vertragsstaaten :
ES FR GB IT SE

(56) Entgegenhaltungen :
DE-A- 2 529 949
US-A- 3 874 249

(73) Patentinhaber : SWF Auto-Electric GmbH
Stuttgarter Strasse 119 Postfach 1763
W-7120 Bietigheim-Bissingen (DE)

(72) Erfinder : EGNER-WALTER, Bruno
Käferflugstr. 43
W-7100 Heilbronn (DE)
Erfinder : PROHASKA, Hans
Nelkenweg 44
W-7120 Bietigheim-Bissingen (DE)
Erfinder : SCHMID, Eckhardt
Heilbronner Str. 62
W-7129 Brackenheim (DE)

EP 0 397 842 B1

Jouve, 18, rue Saint-Denis, 75001 PARIS

EP 0 397 842 B1

## Beschreibung

Die Erfindung bezieht sich auf ein Verfahren zur Montage einer Wischanlage sowie eine Wischanlage für ein Kraftfahrzeug gemäß den Merkmalen des Oberbegriffs des Anspruchs 1.

Zu einer Wischanlage gehört üblicherweise ein Tragrahmen, an dem ein Elektromotor fixiert ist und der außerdem drei Lagerbuchsen für jeweils eine Wischerwelle trägt. die über geeignete Getriebeelemente, nämlich Kurbeln und Schubstangen, von dem Motor angetrieben werden. Üblicherweise werden diese Teile vom Hersteller der Wischanlage zu einer Baueinheit vormontiert, die dann an den Kraftfahrzeughersteller geliefert wird.

Zu einer Wischanlage gehören außerdem die an den Wischerwellen befestigbaren Wischhebel, bestehend aus einem Wischarm und einem daran angelenkten Wischblatt. Diese Teile werden meist je für sich ebenfalls vom Hersteller der Wischanlagen an den Kraftfahrzeughersteller geliefert und dort nach der Montage des Tragrahmens an der Karosserie des Kraftfahrzeuges montiert.

Diese Art der Montage einer Wischanlage an einem Kraftfahrzeug ist umständlich. Darüberhinaus besteht die Gefahr einer Falschmontage, wenn man nicht durch einen erhöhten logistischen Aufwand dafür sorgt, daß die zueinander gehörenden, getrennt gelieferten Teile am Montageband des Kraftfahrzeuges wieder zusammengeführt werden. Da jedoch bei manchen Fahrzeugen die linken und rechten Wischhebel unterschiedlich sind, beispielsweise hat das fahrerseitige Wischblatt oft eine Schaufel zur Erhöhung des Anpreßdruckes, können also selbst bei einem erhöhten logistischen Aufwand Montagefehler nicht völlig ausgeschlossen werden.

Der vorliegenden Erfindung liegt daher die Aufgabe zugrunde, das Verfahren zur Montage einer Wischanlage so auszugestalten, daß auf möglichst einfache Weise eine richtige Zuordnung der Einzelteile gewährleistet ist. Eine Falschmontage soll damit weitgehend ausgeschlossen werden, so daß die Betriebssicherheit des Kraftfahrzeuges verbessert wird.

Diese Aufgabe wird erfindungsgemäß mit den kennzeichnenden Merkmalen des Anspruchs 1 gelöst. Der vorliegenden Erfindung liegt dabei der Gedanke zugrunde, daß zumindest die Wischarme, möglichst aber die kompletten Wischhebel in einer leicht lösbaren Transportstellung an einem Wischanlagenteil fixiert werden sollen. Die so zusammmngestellte Baueinheit soll dann zum Kraftfahrzeug transportiert werden, wo dann die Wischarme aus ihrer Transportstellung in ihre Betriebsstellung gebracht und an der zugehörigen Wischerwelle fixiert werden. Damit wird also auf jeden Fall sichergestellt, daß die Wischarme bzw. Wischhebel an den zugehörigen Wischerwellen der Wischanlagen montiert werden.

Der Grundgedanke der vorliegenden Erfindung könnte in der Weise realisiert werden, daß man an zusätzlich am Tragrahmen einer Wischanlage angebrachten Befestigungszapfen die Wischarme verrastet. Der Monteur beim Kraftfahrzeughersteller kann dann den Tragrahmen in die Karosserie des Kraftfahrzeuges einbauen und die Wischarme dann von diesen zusätzlichen Befestigungszapfen abnehmen und auf die Wischerwellen aufsetzen. Bei einer solchen Ausführung werden also am Tragrahmen,oder einem anderen Getriebeteil zusätzliche, nur zum Transport benötigte Hilfselemente zur Fixierung der Wischarme benötigt.

Sehr viel einfacher und kostengünstiger ist jedoch eine Lösung, bei der gemäß einer vorteilhaften Weiterbildung der Erfindung die Wischarme in einer leicht lösbaren Transportstellung unmittelbar an den Wischerwellen fixiert werden. Man wird also die Wischarme in der üblichen Weise auf den konischen und gerändelten Wischerwellenabschnitt aufschieben und die Befestigungsmutter leicht anziehen. Beim Kraftfahrzeughersteller wird dann die Befestigungsmutter um ein bestimmtes Maß zurückgeschraubt, so daß sich der Wischarm leicht in die Betriebsstellung drehen läßt. Anschließend wird die Befestigungsmutter wieder angezogen und damit der Wischarm in der Betriebsstellung dauerhaft an der Wischerwelle fixiert. Damit kann also schon vom Hersteller der Wischanlagen unverwechselbar der Wischarm bzw. Wischhebel der richtigen Wischerwelle zugeordnet werden.

Da nach dem Grundgedanken der vorliegenden Erfindung die Wischarme bzw. Wischhebel zusammen mit dem Tragrahmen als vormontierte Baueinheit transportiert werden, muß man auf eine raumsparende Anordnung Wert legen. Dies wird mit den Merkmalen des Anspruchs 3 erreicht. Man wird also auch bei sogenannten Parallelwischanlagen, bei denen die Scheibenwischer wenigstens annähernd parallel in gleicher Richtung verschwenkt werden, die Wischarme in der Transportstellung derart fixieren, daß sie, ausgehend von den Wischerwellen, in entgegengesetzte Richtungen zeigen und damit gewissermaßen nebeneinander liegen.

Da die Wischarme üblicherweise zwei federnd aneinander abgestützte Teile, nämlich das Befestigungsteil und das Gelenkteil, aufweisen, muß man während des Transports eine Lagesicherung gewährleisten. Dazu könnte man natürlich den Tragrahmen in besonderer Weise ausgestalten derart, daß sich die Wischarme unmittelbar daran abstützen können. Dies würde allerdings erhöhte Werkzeugkosten für die notwendigen Änderungen des Tragrahmens erfordern.

Bevorzugt wird daher eine Ausführung mit einem Transporthilfselement, das nur während des Transports die Lage der Wischhebel in der Transportstellung sichern soll. Dieses Transporthilfselement soll zwei Teilauf-

2

gaben erfüllen. Es soll nämlich die von der Anpreßdruckfeder des Wischarms ausgeübten Kräfte aufnehmen derart, daß eine bleibende Verformung der Wischlippe des am Wischarm angelenkten Wischblattes vermieden wird. Dabei soll dieses Transporthilfselement möglichst so ausgestaltet sein, daß eine Schwenkbewegung dieses Wischblattes während des Transportes verhindert wird. Außerdem soll dieses Transporthilfselement einen Beitrag zu einer raumsparenden Anordnung leisten, indem es so gestaltet ist, daß die Wischarme gewissermaßen parallel zum Rahmen ausgerichtet sind.

Die Erfindung bezieht sich außerdem auf eine Wischanlage zur Montage an einem Kraftfahrzeug, bei der die Wischarme oder die Wischhebel in einer von der Betriebsstellung abweichenden Transportstellung leicht lösbar an einem Wischanlagenteil, vorzugsweise an den zugehörigen Wischer-Wellen fixiert sind. Dieser Wischanlage soll ein Transporthilfselement zugeordnet sein, das die Lage der Wischarm oder Wischhebel in der Transportstellung sichert. Bei einer besonders bevorzugten Ausführung, bei der zur Wischanlage ein als Rohrrahmen ausgebildeter Tragrahmen gehört, soll dieses Transporthilfselement einerseits an diesem Rohrrahmen und andererseits an einem Getriebelement, vorzugsweise einer Schubstange abgestützt werden.

Die Erfindung und deren vorteilhafte Ausgestaltungen werden nachstehend anhand des in der Zeichnung dargestellten Ausführungsbeispieles näher erläutert. Es zeigen:

Fig. 1 eine Ansicht auf eine Wischanlage,

Fig. 2 eine perspektivische Ansicht auf ein Transporthilfselement,

Fig. 3 eine perspektivische Teilansicht auf eine Wischanlage mit

Fig. 4 einen Schnitt durch Fig. 3 und

Fig. 5 einen Schnitt ähnlich Fig. 4 bei einem anderen Ausführungsbeispiel eines Transporthilfselements.

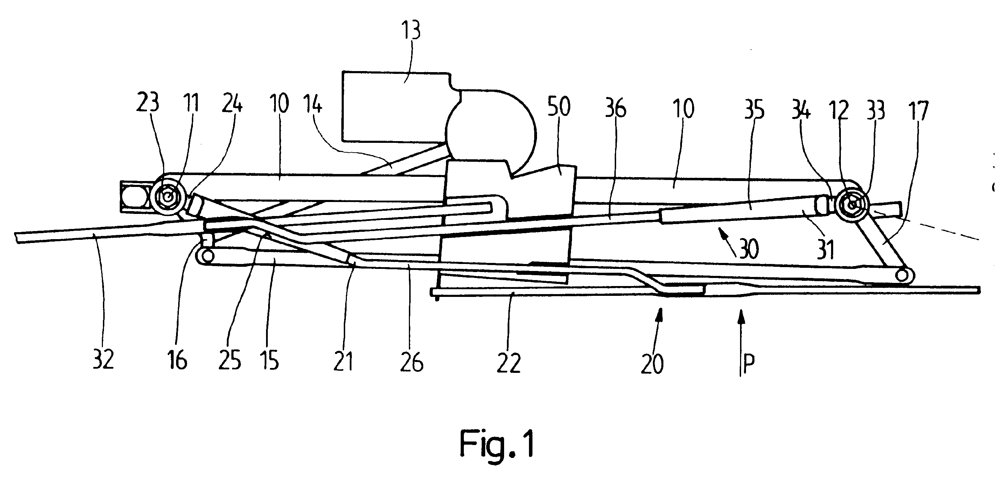

Zu der Wischanlage nach Fig. 1 gehört ein aus einem Rohr aufgebauter Tragrahmen 10, der in bekannter Weise an beiden Endseiten jeweils eine Lagerbuchse mit einer darin geführten Wischerwelle 11, 12 trägt. An diesem Tragrahmen 10 ist über ein Befestigungsblech auch ein Elektromotor 13 fixiert, der über Getriebeelemente, nämlich eine nicht näher dargestellte Motorkurbel sowie Schubstangen 14, 15 und Schwingen 16, 17 diese Wischerwellen pendelnd antreibt.

An jeder Wischerwelle ist ein Wischhebel 20 bwz. 30 fixiert. Zu jedem Wischhebel 20, 30 gehört ein Wischarm 21, 31 sowie jeweils ein am freien Ende dieses Armes angelenktes Wischblatt 22, 32.

Die Wischarme 21 , 31 sind in bekannter Weise auf den Wischerwellen 11, 12 fixiert. Die Wischerwelle hat einen konisch zulaufenden gerändelten Befestigungsabschnitt und daran anschließend einen Gewindeabschnitt, auf den dann die Befestigungsmutter 23 bzw. 33 aufgeschraubt wird. Zu jedem Wischarm 21, 31 gehört ein Befestiungsteil 24, 34 mit einer konischen Bohrung, die auf den konischen, gerändelten Befestigunsabschnitt der Wischerwelle aufgesteckt wird. Durch das Anziehen der Befestigungsmutter 23 bzw. 33 wird dann in bekannter Weise eine drehfeste Verbindung zwischen dem Wischhebel 20, 30 und der zugeordneten Wischerwelle 11, 12 erreicht. Derartige Ausführungen werden in großen Stückzahlen serienmäßig geliefert, so daß sich weitere Erläuterungen und Zeichnungen zur Art der Befestigung des Wischhebels auf der Wischerwelle erübrigen.

Für die vorliegende Erfindung wesentlich ist nun, daß der Hersteller der Wischanlage die Wischarme 21, 31 an einem Wischanlagenteil, im vorliegenden Fall unmittelbar an der Wischerwelle 11, 12 in einer leicht lösbaren Transportstellung fixiert. in der Praxis bedeutet dies, daß die Wischarme auf die zugehörigen Wischerwellen aufgesetzt und die Befestigungsmuttern 23, 33 leicht angezogen werden. Die derart vormontierte Baueinheit gemäß Fig. 1 wird dann dem Kraftfahrzeughersteller zugeliefert, der die Wischanlage in das Kraftfahrzeug einbaut. Dabei werden die Befestigungsmuttern 23 und 33 nur soweit zurückgedreht, daß sich diese Wischarme bzw. Wischhebel aus der Transportstellung in die Betriebsstellung schwenken lassen. Der eine Wischhebel 30 muß dabei um einen verhältnismäßig großen Winkel in die gestrichelt angedeutete Lage verschwenkt werden, während der andere Wischhebel 20 um einen verhältnismäßig kleinen Winkel verschwenkt und so eingestellt werden muß, daß das Wischblatt möglichst parallel zu dem unteren Scheibenrand verläuft.

In der Betriebsstellung der Wischhebel werden dann die Befestigungsmuttern 23, 33 fest angezogen, so daß die Wischarme 21, 31 dauerhaft an diesen Wischerwellen 11, 12 fixiert sind.

Aus Fig. 1 ist ersichtlich, daß die Wischarme 21, 31 in der dargestellten Transportstellung an den Wischerwellen 11, 12 derart fixiert sind, daß sie, ausgehend von diesen Wischerwellen 11, 12 , in entgegengesetzte Richtungen zeigen. Sie liegen also gewissermaßen nebeneinander in einer Stellung, die später im Wischbetrieb nicht erreicht wird, sofern es sich um eine sogenannte Parallelwischanlage handelt. Aus Fig. 1 geht weiterhin hervor, daß die Wischblätter 22, 32 bereits an den Wischarmen 21, 31 angelenkt sind. In der überwiegenden Anzahl aller Fälle wird dies der Fall sein. Denkbar sind aber auch Ausnahmefälle, bei denen die Wischblätter von einem anderen Zulieferanten stammen. In einem solchen Fall erzielt man aber nach dem erfindungsgemäßen Gedanken zumindest den Vorteil, daß der Montageaufwand beim Kraftfahrzeughersteller reduziert wird, da die Wischarme schon vormontiert mit dem Tragrahmen geliefert werden.

Die heute üblichen Wischarme haben ein Befestigungsteil 24, 34, an dem schwenkbar ein Gelenkteil 25, 35 angelenkt ist, an dem die Wischstange 26, 36 fixiert ist. Das Gelenkteil 25, 35 ist über eine Anpreßdruckfeder derart am Befestigungsteil abgestützt, daß das Wischblatt gegen die zu reinigende Scheibe gedrückt wird. Bei solchen Ausführungen mit einer Gelenkverbindung zwischen dem Befestigungsteil 24, 34 und dem Gelenkteil 25, 35 kann über die Befestigungsmutter 23, 33 allein eine stabile Fixierung der Wischhebel während des Transports nicht erreicht werden. Es ist daher ein Transporthilfselement 50 vorgesehen, das an einem Wischanlagenteil, im vorliegenden Fall einerseits am Tragrahmen 10 und andererseits an einem Getriebeelement, nämlich der Schubstange 15 abgestützt ist. Dieses Transporthilfselement soll in der Transportstellung die Lage der Wischhebel sichern und dabei zugleich die Wischblätter entlasten, so daß keine bleibenden Verformungen der Wischlippen entstehen können.

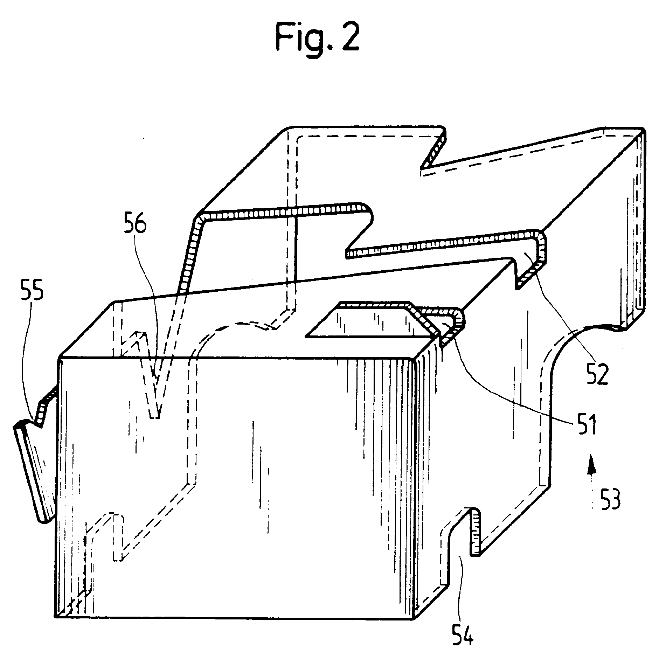

Bei der Ausführung nach Fig. 1 wird ein Transporthilfselement 50 verwendet, das aus einem stabilen Karton gefaltet und in Fig. 2 in perspektivischer Ansicht dargestellt ist. Dieses Transporthilfselement ist ein kastenartiges Bauteil, das Sicherungsaufnahmen 51, 52 für jeden Wischarm 21, 31 bzw. die jeweilige Wischstange 26, 36 aufweist. Auf der diesen Sicherungsaufnahmen 51, 52 gegenüberliegenden Seite hat diese kastenartige Transporthilfe 50 eine erste Abstützaufnahme 53 mit einer dem Rohrrahmen 10 wenigstens teilweise angepaßten Kontur. Seitlich daneben hat die Transporthilfe 50 eine zweite Abstützaufnahme 54 mit einer der Schubstange 15 angepaßten Kontur. Diese Transporhilfe 50 ist damit zwischen Tragrahmen 10 bzw. Schubstange 15 einerseits und den in Sicherungsaufnahmen liegenden Wischstangen 26, 36 eingespannt. Darüberhinaus hat diese Transporthilfe 50 noch Halteaufnahmen 55 und 56 mit einer der Wischlippe des Wischblattes 22, 32 angepaßten Kontur. Diese Halteaufnahmen 55, 56 sollen eine Verdrehsicherung der Wischblätter 22, 32 gegenüber den Wischarmen 21, 31 gewährleisten.

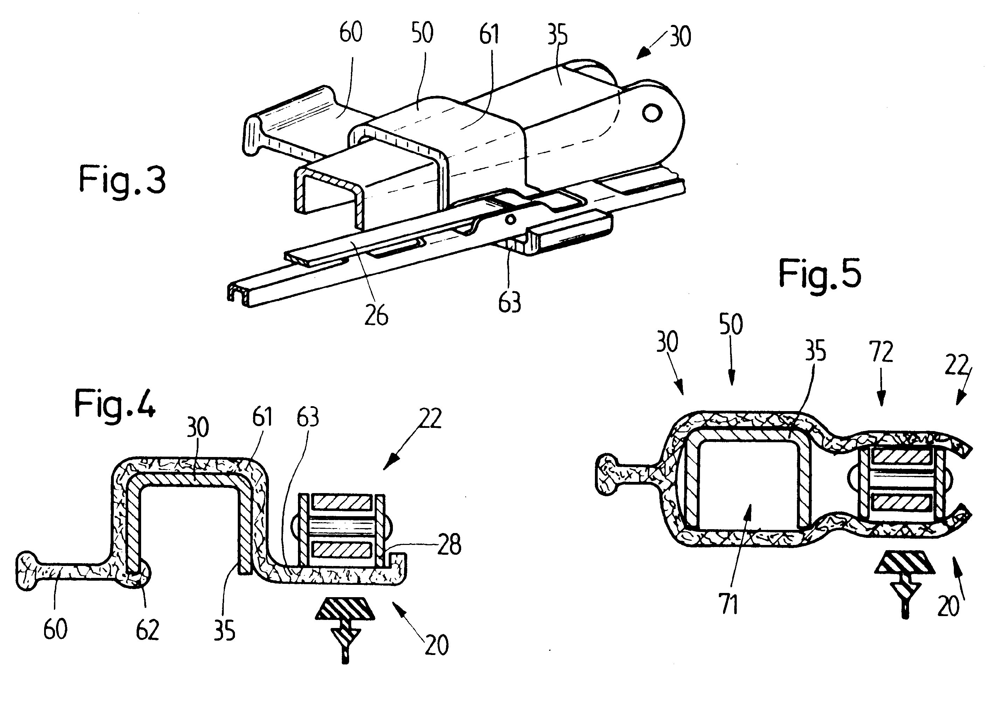

Anhand der Fig. 3, 4 und 5 sollen im folgenden andere Ausführungsformen möglicher Transporthilfselemente erläutert werden. Fig. 3 zeigt dabei perspektivisch eine Teilansicht etwa in Pfeilrichtung P in Fig. 1 bei einer anderen Wischanlage. Aus den Fig. 3 und 4 geht also hervor, daß das Transporthilfselement 50 ohne Abstützung an dem Tragrahmen die beiden Wischhebel 20, 30 miteinander verbindet. Diese Transporthilfe 50 hat einen Griff 60 und daran anschließend einen ersten U-förmigen Abschnitt 61, der das Gelenkteil 35 des einen Wischhebels 30 umgreift und an diesem Gelenkteil durch eine Rastschulter 62 verdrehsicher gehalten ist. An den ersten U-förmigen Abschnitt 61 schließt sich ein Ausleger 63 an, der unter den Tragbügel 28 des zum anderen Wischhebel 20 gehörenden Wischblattes 22 greift. Dabei wird eine Ausführung bevorzugt, bei der dieser Ausleger 63 das andere Wischblatt 22 an der Anlenkstelle der Wischstange 26 untergreift, so daß über den Ausleger 63 zugleich eine Verdrehsicherung für dieses andere Wischblatt 22 geschaffen ist. Das Transporthilfselement 50 nach den Fig. 3 und 4 sichert also die Relativlage zwischen den beiden Wischhebeln unmittelbar ohne Abstützung an einem Tragrahmen oder einem Getriebeelement.

Ähnliches gilt auch für die Ausführung nach Fig. 5. Hier ist die Transporthilfe 50 klammerartig ausgebildet, wobei ein erster Klammerabschnitt 71 das Gelenkteil 35 des einen Wischhebels 30 umgreift und ein zweiter Klammerabschnitt 72 das Tragbügelsystem des Wischblattes 22 des anderen Wischhebels 20 wiederum vorzugsweise an der Gelenkstelle umgreift.

Auch bei den Ausführungen nach den Fig. 3 bis 5 wird also durch die Transporthilfe 50 sichergestellt, daß die beiden Wischhebel etwa parallel zueinander in einer Ebene senkrecht zu den Wischer-wellen angeordnet sind. Damit ist eine raumsparende Baueinheit geschaffen, die auch leicht transportiert werden kann. Die dargestellten Transporthilfen können kostengünstig hergestellt und mehrfach wiederverwendet werden.

## Patentansprüche

1. Verfahren zur Montage einer Wischanlage an einem Kraftfahrzeug, wobei zu der Wischanlage ein Tragrahmen (10) gehört, an dem zwei von einem Motor über Getriebeelemente antreibbare Wischerwellen (11,12) für jeweils einen daran befestigbaren Wischhebel (20,30), bestehend aus jeweils einem Wischarm (21,31) und einem daran angelenkten Wischblatt (22,32), gehalten sind, dadurch gekennzeichnet, daß die Wischarme (21, 31) in einer leicht lösbaren Transportstellung an einem Wischanlagenteil (11,12) fixiert werden, daß die so zusammengestellte Baueinheit zum Kraftfahrzeug transportiert und daß anschließend die Wischarme (21,31) aus ihrer Transportstellung in ihre Betriebsstellung gebracht und dauerhaft an der zugehörigen Wischerwelle (11,12) fixiert werden.

2. Verfahren nach Anspruch 1, dadurch gekennzeichnet, daß die Wischarme (21, 31) in einer leicht lösbaren Transportstellung an den Wischerwellen (11, 12) fixiert werden, daß die so vorgefertigte Baueinheit am Kraftfahrzeug montiert wird und daß anschließend die Wischarme (21, 31) aus ihrer Transportstellung in ihre Betriebsstellung verschwenkt und dauerhaft an der zugehörigen Wischerwelle (11, 12) fixiert werden.

3. Verfahren nach Anspruch 2, dadurch gekennzeichnet, daß die Wischarme (21,31) für die Transportstellung an den Wischerwellen (11, 12) derart fixiert werden, daß sie, ausgehend von den Wischerwellen (11, 12), in entgegengesetzte Richtungen zeigen.

4. Verfahren nach wenigstens einem der Ansprüche 1 bis 4, dadurch gekennzeichnet, daß die Wischblätter (22, 32) vor der Montage der Baueinheit am Kraftfahrzeug bereits an den zugehörigen Wischarmen (21, 31) angelenkt werden.

5. Verfahren nach Anspruch 4, dadurch gekennzeichnet, daß am Tragrahmen (10) und/oder dem am Tragrahmen fixierten Motor (13) und/oder den Getriebeelementen (14, 15, 16, 17) ein Transporthilfselement (50) abgestützt wird, durch das die Lage der Wischhebel (20,30) in der Transportstellung gesichert wird.

6. Verfahren nach Anspruch 4, dadurch gekennzeichnet, daß die beiden Wischhebel (20,30) in der Transportstellung über ein Transporthilfselement (50) aneinander abgestützt sind, durch das die Lage der Wischhebel (20, 30) in der Transportstellung gesichert wird.

7. Verfahren nach Anspruch 5 oder 6, dadurch gekennzeichnet, daß das Transporthilfselement (50) nach der Endmontage einer Wischanlage wiederverwendet wird.

8. Wischanlage zur Durchführung des Verfahrens nach einem der vorhergehenden Ansprüche, dadurch gekennzeichnet, daß die Wischarme ( 21, 31) oder die Wischhebel (20, 30) in einer von der Betriebsstellung abweichenden Transportstellung leicht lösbar an einem Wischanlagenteil (11, 12) fixiert sind.

9. Wischanlage nach Anspruch 8, dadurch gekennzeichnet, daß die Wischarme (21, 31) oder die Wischhebel (20, 30) in einer von der Betriebsstellung abweichenden Transportstellung leicht lösbar unmittelbar an den zugehörigen Wischerwellen (22,32) fixiert sind.

10. Wischanlage nach Anspruch 9, dadurch gekennzeichnet, daß die Lage der Wischarme (21, 31) oder Wischhebel (20, 30) in der Transportstellung durch ein Transporthilfselement (50) gesichert ist.

11. Wischanlage nach Anspruch 10, dadurch gekennzeichnet, daß das Transporthilfselement ein kastenartiges Bauteil ist, das jeweils eine Sicherungsaufnahme (51, 52) für jeden Wischarm oder Wischhebel und im Abstand zu diesen Sicherungsaufnahmen (51, 52) wenigstens eine auf den Tragrahmen (10) abgestimmte Abstützaufnahme (53) aufweist.

12. Wischanlage nach Ansrpuch 11, dadurch gekennzeichnet, daß der Tragrahmen (10) als Rohrrahmen ausgebildet ist und das kastenartige Bauteil eine zweite Abstützaufnahme (54) aufweist, die sich an einem Getriebeelement (15) zwischen dem Motor (13) und einer Wischerwelle (11) abstützt.

13. Wischanlage nach wenigstens einem der Ansprüche 10 bis 12, dadurch gekennzeichnet, daß die Wischstangen (26, 36) der Wischarme (21, 31) in den Sicherungsaufnahmen (51, 52) liegen und daß das Transporthilfselement (50) zusätzlich Haltaufnahmen (55, 56) aufweist, die eine Verdrehsicherung der Wischblätter (22, 32) gegenüber den Wischarmen (21, 31) gewährleisten.

14. Wischanlage nach wenigstens einem der Ansprüche 10 bis 13, dadurch gekennzeichnet, daß das Transporthilfselement (50) aus Karton gefaltet ist.

15. Wischanlage nach Anspruch 10, dadurch gekennzeichnet, daß das Transporthilfselement (50) ein Bauteil ist, das die beiden Wischarme (21, 31) oder Wischhebel (20, 30) miteinander verbindet und deren Lage relativ zueinander sichert.

16. Wischanlage nach Anspruch 15, dadurch gekennzeichnet, daß das Bauteil (50) an einem Gelenkteil (35) an einem Wischarm (31) des einen Wischhebels (30) festgelegt, vorzugsweise verrastet ist und mit einem Ausleger (63) am Tragbügelsystem des Wischblattes des anderen Wischhebels angreift.

17. Wischanlage nach Anspruch 16, dadurch gekennzeichnet, daß das Bauteil (50) klammerartig ausgebildet ist und mit einem ersten Klammerabschnitt (71) ein Gelenkteil (35) an einem Wischarm (31) des einen Wischhebels (30) und mit einem zweiten Klammerabschnitt (72) das Tragbügelsystem (28) des Wischblattes (22) des anderen Wischhebels (72) umgreift.

18. Wischanlage nach Anspruch 16 oder 17, dadurch gekennzeichnet, daß das Bauteil (50) im Bereich der Gelenkstelle zwischen Wischblatt (22) und Wischarm (21) an dem Tragbügelsystem (28) angreift.

## Claims

1. A process for assembling a wiper blade to a motor vehicle, whereby the wiper system comprises a support frame (10), on which two wiper shafts (11, 12) for a wiper arm-and-blade assembly (20, 30) each attachable thereto, are held, which wiper shafts can be driven by a motor via gearing elements, and which wiper arm-and-blade assemblies consist each of a wiper arm (21, 31) and a wiper blade (22, 32) mounted to said wiper arm, wherein the wiper arms (21, 31) are fixed onto a member of the wiper system (11, 12) in a transport position that can simply be released, wherein the unit composed in such a way is transported to the motor vehicle and wherein afterwards the wiper arms (21, 31) change from their transport position into operational position and are continually fixed onto the respective wiper shaft (11, 12).

2. A process according to claim 1, wherein the wiper arms (21, 31) are fixed onto the wiper shafts (11, 12) in a transport position that can simply be released, wherein the unit pre-assembled in such a way is mounted to the motor vehicle and wherein afterwards the wiper arms (21, 31) are swivelled from their transport position into theri operational position and are continually fixed onto the respective wiper shaft (11, 12).

3. A process accoreding to claim 2, wherein the wiper arms (21, 31) for the transport position are fixed onto the wiper shafts (11, 12) in such a way that they, starting off form the wiper shafts (11, 12) point into oppiste directions.

4. A process according to at least one of the claims 1 to 4, wherein the wiper blades (22, 32) aare already mounted onto the respective wiper arms (21, 31) before the unit is assembled to the motor vehicle.

5. A process according to claim 4, wherein a transport auxiliary element (50) is supported on the support frame (10) and/or on the motor fixed to the support frame (13) and/or on the gearing elements (14, 15, 16, 17), by which transport auxiliary element (50) the position of the wiper arm-and-blade assemblies (20, 30) in the transport position is ensured.

6. A process according to claim 4, wherein the two wiper arm-and-blade assemblies (20, 30) in the transport position is supported by way of a transport auxiliary element (50) securing the position of the wiper arm-and-blade assemblies (20, 30) in the transport position.

7. A process according to claim 5 or 6, wherein the transport auxiliary element (50) is reused after the end of the assembly of a wiper system.

8. A wiper system for implementation of the process according to one of the preceding claims, wherein the wiper arms (21, 31) or the wiper arm-and-blade assemblies (20, 30) are fixed to a member of the wiper system (11, 12) in a transport position deviating from the operational position in such a way that they can simply be released.

9. A wiper system according to claim 8, wherein the wiper arms (21, 31) or the wiper arm-and-blade assemblies (20, 30) are directly fixed to the respective wiper shafts (22, 32) in a transport position deviating from the operational position in such a way that they can simply be released.

10. A wiper system according to claim 9, wherein the position of the wiper arms (21, 31) or the wiper arm-and-blade assemblies (20, 30) in the transport position is secured by a transport auxiliary element (50).

11. A wiper system according to claim 10, wherein the transport auxiliary element is a box-like unit which comprises a securing receiver (51, 52) each for every wiper arm or wiper arm-and-blade assembly and which, at a certain distance of these securing receivers (51, 52), comprises at least one supporting receiver (53) formed in correspondence with the support frame (10).

12. A wiper system according to claim 11, wherein the support frame (10) is formed as a tubular frame and wherein the box-like component comprises a second supporting receiver (54) supported on a gearing member (15) between the motor 813) and a wiper shaft (11).

13. A wiper system according to at least one of the claims 10 to 12, wherein the wiper rods (26, 36) of the wiper arms (21, 31) lie in the securing recievers (51, 52) and wherein the transport auxiliary element (60) additionally comprises holding receivers (55, 56) prtecting the wiper blades (22, 32) against twisting with respect to the wiper arms (21, 31).

14. A wiper system according to at least one of the claims 10 to 13, wherein the transport auxiliary element (50) is folded from carton.

15. A wiper system according to claim 10, wherein the transport auxiliary element (50) is a component connecting the two wiper arms (21, 31) or wiper arm-and-blade assemblies with each other and securing their position in relation to each other.

16. A wiper system according to cliam 15, wherein the component (50) is fixed onto a linking member (35) on a wiper arm (31) of the one wiper arm-and-blade assembly (30), preferably is locked, and acts upon the carrier yoke system of the wiper blade of the other wiper arm-and-blade assembly by way of an extension arm (63).

17. A wiper system according to claim 16, wherein the component (50) is formed in the shape of a cramp and grasps a linking member (35) on a wiper arm (31) of the one wiper arm-and-blade assembly (30) by means of a first cramp section (71) and the carrier yoke system (28) of the wiper blade (22) of the other wiper arm-and-blade assembly (72) by means of a second cramp section (72).

18. A wiper system according to claim 16 or 17, wherein the component (50) act upon the carrier yoke system (28) in the area of the linking point between the wiper blade (22) and wiper arm (21).

## Revendications

1. Procédé de montage d'un dispositif d'essuie-glace sur un véhicule automobile, dans lequel le dispositif d'essuie-glace comprend une platine support (10), sur laquelle sont montés deux arbres (11, 12) d'essuie-glace pouvant être entraînés par un moteur Par l'intermédiaire d'éléments de transmission, chacun pour un essuie-glace (20, 30) qui peut y être fixé, chaque essuie-glace étant composé d'un bras (21, 31) d'essuie-glace et d'un balai (22, 32) d'essuie-glace qui y est articulé, caractérisé en ce que les bras (21, 31) d'essuie-glace sont immobilisés sur une partie (11, 12) du dispositif d'essuie-glace, dans une position de transport facilement démontable, en ce que le sous-ensemble ainsi composé est transporté jusqu'au véhicule automobile et en ce qu'ensuite, les bras (21, 31) d'essuie-glace sont déplacés de leur position de transport à leur position de service et fixés durablement chacun sur son arbre respectif (11, 12) d'essuie-glace.

2. Procédé selon la revendication 1, caractérisé en ce que les bras (21, 31) d'essuie-glace sont immobilisés sur leurs arbres (11, 12) d'essuie-glace dans une position de transport facilement démontable, en ce que le sous-ensemble ainsi pré-assemblé est monté sur le véhicule automobile et en ce qu'ensuite, les bras (21, 31) d'essuie-glace sont déplacés de leur position de, transport à leur position de service par pivotement et sont fixés durablement sur leur arbre respectif (11, 12) d'essuie-glace.

3. Procédé selon la revendication 2, caractérisé en ce que, pour la position de transport, les bras (21, 31) d'essuie-glace sont immobilisés sur les arbres (11, 12) d'essuie-glace de telle manière qu'ils pointent dans des directions opposées à partir des arbres (11, 12) d'essuie-glace.

4. Procédé selon au moins une des revendications 1 à 4, caractérisé en ce que les balais ( 22, 32) d'essuie-glace sont déjà articulés à leurs bras respectifs (21, 31) d'essuie-glace avant le montage du sous-ensemble sur le véhicule automobile.

5. Procédé selon la revendication 4, caractérisé en ce que, sur la platine support (10) et/ou sur le moteur (13) fixé à la platine support et/ou sur les éléments de transmission (14, 15, 16, 17), est appuyé un élément auxiliaire de transport (50) qui immobilise les essuie-glaces (20, 30) dans la position de transport.

6. Procédé selon la revendication 4, caractérisé en ce que, dans la position de transport, les deux essuie-glaces (20, 30) sont appuyés l'un contre l'autre par l'intermédiaire d'un élément auxiliaire de transport (50) qui immobilise les essuie-glaces (20, 30) dans la position de transport.

7. Procédé selon la revendication 5 ou 6, caractérisé en ce que l'élément auxiliaire de transport (50) est réutilisé après le montage final d'un dispositif d'essuie-glace.

8. Dispositif d'essuie-glace pour la mise en oeuvre du procédé selon l'une des revendications précédentes, caractérisé en ce que les bras (21, 31) d'essuie-glace ou les essuie-glaces (20, 30) sont immobilisés sur une partie (11, 12) du dispositif d'essuie-glace d'une façon facilement démontable, dans une position de transport qui est différente de la position de service.

9. Dispositif d'essuie-glace selon la revendication 8, caractérisé en ce que les bras (21, 31) d'essuie-glace ou les essuie-glaces (20, 30) sont immobilisés directement sur leurs arbres respectifs (22, 32) d'essuie-glace par une liaison facilement démontable, dans une position de transport différente de la position de service.

10. Dispositif d'essuie-glace selon la revendication 9, caractérisé en ce que les bras (21, 31) d'essuie-glace ou les essuie-glaces (20, 30) sont immobilisés dans la position de transport par un élément auxiliaire de transport (50).

11. Dispositif d'essuie-glace selon la revendication 10, caractérisé en ce que l'élément auxiliaire de transport est un élément en forme de boîte qui présente un logement d'immobilisation (51, 52) pour chaque bras ou chaque essuie-glace et, à un certain écartement de ces logements d'immobilisation (51, 52), au moins un logement d'appui (53) adapté à la platine support (10).

12. Dispositif d'essuie-glace selon la revendication 11, caractérisé en ce que la platine support (10) est constituée par une monture tubulaire et l'élément en forme de boîte présente un second logement d'appui (54) qui s'appuie sur un élément de transmission (15) entre le moteur (13) et un arbre (11) d'essuie-glace.

13. Dispositif d'essuie-glace selon au moins l'une des revendications 10 à 12, caractérisé en ce que les barres (26, 36) d'essuie-glace des bras (21, 31) d'essuie-glace reposent dans les logements d'immobilisation (51, 52) et en ce que l'élément auxiliaire de transport (50) présente en supplément des logements de retenue (55, 56) qui assurent l'immobilisation angulaire des balais (22, 32) d'essuie-glace par rapport aux bras (21, 31) d'essuie-glace.

14. Dispositif d'essuie-glace selon au moins une des revendications 10 à 13, caractérisé en ce que l'élément auxiliaire de transport (50) est formé en carton plié.

15. Dispositif d'essuie-glace selon la revendication 10, caractérisé en ce que l'élément auxiliaire de transport (50) est un élément qui relie les deux bras (21, 31) d'essuie-glace ou les deux essuie-glaces l'un à l'autre, et les immobilise l'un par rapport à l'autre.

16. Dispositif d'essuie-glace selon la revendication 15, caractérisé en ce que l'élément (50) est fixé, de préférence verrouillé, sur une partie d'articulation (35) d'un bras (31) d'essuie-glace de l'un (30) des essuie-glaces, et attaque par une console (63) le système de palonniers porteurs du balai d'essuie-glace de l'autre essuie-glace.

17. Dispositif d'essuie-glace selon la revendication 16, caractérisé en ce que l'élément (50) présente la forme d'une agrafe (17) et encadre, par un premier segment (71) de l'agrafe, une partie d'articulation (35) d'un bras (31) de l'un (30) des essuie-glaces et, par un deuxième segment (72) d'agrafe, le système de palonniers porteurs (28) du balai (22) d'essuie-glace de l'autre essuie-glace.

18. Dispositif d'essuie-glace selon la revendication 16 ou 17, caractérisé en ce que l'élément (50) attaque le système de palonniers porteurs (28) dans la région d'articulation prévue entre le balai (22) d'essuie-glace et le bras (21) d'essuie-glace.

Fig.1

EP 0 397 842 B1

# Fig. 2

Fig.3

60 50 61 35 30

26 63

EP 0 397 842 B1

Fig.5

30 50 35 72 22

71 20

Fig.4

30 61 63 22

60 62 35 28

20